# EUROPEAN PATENT APPLICATION

(11) **EP 4 803 568 A1**
(43) Date of publication of application: **09.09.2026**
(21) Application number: 24908108.4
(22) Date of filing: 19.12.2024
(51) Int. Cl.: C08K 3/013, C08K 3/22, C08K 3/28, C08L 75/04

(54) **CURABLE COMPOSITION**

(30) Priority: 22.12.2023 KR 20230190434
(71) Applicant: LG Chem, Ltd., Seoul 07336 (KR)
(72) Inventor: HONG, Sung Bum, Daejeon 34122 (KR); KIM, Hye Jin, Daejeon 34122 (KR); SEO, Sang Hyuk, Daejeon 34122 (KR)
(74) Representative: Hoffmann Eitle
(86) International application number: PCT/KR2024/020696
(87) International publication number: WO 2025/135825

(57) **Abstract**

The present specification discloses a curable composition. The curable composition can exhibit excellent storage stability without generating viscosity changes or viscosity unevenness due to sedimentation of an excessive amount of filler, and the like, even in a state of containing the filler to achieve high thermal conductivity. The curable composition can simultaneously exhibit high thermal conductivity and storage stability even while using a hydroxide filler as a filler. The present specification discloses a use of the curable composition.

## Description

### Technical Field

This application claims the benefit of priority based on Korean Patent Application No. 10-2023-0190434 dated December 22, 2023, the entire disclosure of which is incorporated herein by reference.

The present specification discloses a curable composition and a use thereof.

### Background Art

In some cases, a thermally conductive filler is formulated in a resin component, thereby being used as a thermally conductive material such as a TIM (Thermal Interface Material).

Generally, the more filler the material contains, the higher its thermal conductivity, so that depending on the application, an excessive amount of filler is formulated with the resin component.

For example, Patent Document 1 discloses the content that a material prepared by formulating a thermally conductive filler in a resin component is applied to a battery, where in an example, the material comprises a thermally conductive filler in an amount of 85 wt% or more.

Typically, fillers have a high density compared to resin components, so that upon storage of materials in which thermally conductive fillers are formulated in resin components, the fillers settle along the direction of gravitational force. Such filler sedimentation causes material viscosity changes, or viscosity unevenness, and the like, so that it can lower processability for application of the material, and even when it has been applied as a thermally conductive material, it can also lead to decreased thermal conductivity and reduced thermal conductivity uniformity.

The risk of such problems increases more as the filler content in the material increases.

Among fillers known as thermally conductive fillers, hydroxide fillers, such as aluminum hydroxide, have flame retardancy while having lower densities compared to other fillers, so that the fillers can be utilized for applications requiring weight saving and flame retardancy. However, hydroxide fillers exhibit lower thermal conductivity than other known thermally conductive fillers, so that when the hydroxide filler is used, its content must be increased to secure the desired thermal conductivity, and the content thus increased further increases the risk of the above-described problems.

### [Prior Art Documents]

### [Patent Documents]

(Patent Document 1) Korean Registered Patent No. 10-2393127

### Disclosure

### Technical Problem

The present specification discloses a curable composition. It is an object of the present specification to disclose a curable composition capable of preventing occurrence of viscosity changes or viscosity unevenness by preventing filler sedimentation, and the like, even in a state of containing an excessive amount of filler to achieve high thermal conductivity, and ensuring storage stability. It is another object of the present specification to disclose a curable composition capable of simultaneously securing high thermal conductivity and storage stability even while using a hydroxide filler as a filler.

The present specification discloses a use of the curable composition.

### Technical Solution

Among physical properties mentioned herein, the physical property whose measurement temperature affects the result is a physical property measured at room temperature, unless otherwise specified.

The term room temperature is a natural temperature without heating or cooling, which means, for example, any temperature within a range of about 10°C to 30°C, for example, a temperature of about 23°C or about 25°C or so.

In this specification, the unit of temperature is °C, unless otherwise specified.

Among physical properties mentioned herein, when a measurement pressure affects the result, the relevant physical property is a physical property measured at normal pressure, unless otherwise specified.

The term normal pressure is a natural pressure without pressurization or depressurization, which typically refers to a pressure within a range of about 700 mmHg to 800 mmHg or so.

Among physical properties mentioned herein, the physical property whose measurement humidity affects the results is a physical property measured at standard-state humidity, unless otherwise specified.

The standard-state humidity means a relative humidity (RH%) within a range of about 50% to 60%, and for example, means a relative humidity (RH%) of about 50%, 55%, or 60% or so.

In this specification, an average particle diameter of a filler refers to a so-called D50 particle diameter (Median Diameter), unless otherwise specified. The method of measuring the D50 particle diameter is summarized in "2. Measurement of average particle diameter" of Example sections of this specification.

In this specification, the terms spherical filler and non-spherical filler are concepts distinguished by a circularity degree, and categories of the non-spherical filler may include rectangular, amorphous, disc-shaped, or needle-shaped fillers, and the like.

In this specification, fillers with a circularity degree of about 0.9 or more, or 0.95 or more may be designated as spherical fillers, while fillers with a circularity degree of less than 0.95, or less than 0.9 may be designated as non-spherical fillers. A sphericity degree may be determined through a particle shape analysis of a filler. A sphericity degree of a filler as a three-dimensional particle is defined as a ratio (S'/S) of a surface area (S) of a filler and a surface area (S') of a sphere with the same volume as the filler. For actual fillers, a circularity degree is generally used. The circularity degree is expressed as a ratio of a boundary (P) of a two-dimensional image obtained from the actual filler and a boundary of a circle with the same area (A) as that of the same image, which is obtained using the following equation:$Circularity degree = 4 π {A / P}^{2}$

The circularity degree is expressed as a value from 0 to 1, where a perfect circle has a value of 1, and the more irregular the shape, it has a value lower than 1. In this specification, the sphericity degree value is an average value of circularity degrees measured using Marvern's particle shape analyzer (FPIA-3000).

The present specification discloses a curable composition. The term curable composition means a composition capable of being cured. The term curing means a phenomenon in which the viscosity and/or hardness of the composition increases due to a chemical and/or physical reaction or interaction.

The curable composition may be a solvent-based or solvent-free composition. The term solvent-based composition means a composition comprising a solvent (aqueous or organic solvent), and the term solvent-free composition means a composition substantially free of the solvent. In the solvent-free composition, the upper limit of the solvent content may be 5 wt%, 4 wt%, 3 wt%, 2 wt%, 1 wt%, 0.5 wt%, 0.1 wt%, 0.05 wt%, 0.01 wt%, 0.005 wt%, 0.001 wt%, 0.0005 wt%, or 0.0001 wt% or so, and the lower limit thereof may be 0 wt% or so. The content of the solvent in the solvent-free composition may be within a range of less than or equal to, or less than any one of the above-described upper limits; or within a range of more than or equal to, or more than the above-described lower limit while being less than or equal to, or less than any one of the above-described upper limits.

The curable composition may be an energy-ray (e.g., ultraviolet) curing-type composition, a moisture curing-type composition, a thermosetting composition, or a room-temperature curing-type composition. When the curable composition is the energy-ray curing type, the curing of the curable composition may be performed by irradiation of energy rays, such as ultraviolet rays; when the curable composition is the moisture curing type, the curing of the curable composition may be performed by a method of maintaining the composition under appropriate moisture; when it is the thermosetting type, the curing of the curable composition may be performed by a method of applying appropriate heat to the composition; or when it is the room-temperature curing type, the curing of the curable composition may be performed by a method of maintaining the composition at room temperature.

In one example, the curable composition may be a room-temperature curing-type composition, and may be, particularly, a composition in which the curing may be performed by maintaining the composition at room temperature without application of external energy such as energy rays, or application of excessive moisture.

The curable composition may be a one-component or two-component composition, and in some cases, may be any portion of the two-component composition.

The term one-component composition means a composition in which all components necessary for curing are present in a mixed state, as is known, and it is cured if certain conditions (e.g., application of heat or energy rays, exposure to moisture, etc.) are met.

The term two-component composition means a composition in which components required for curing are present in a physically separated state (e.g., separated into a main agent part and a curing agent part), and the separated components are mixed, and cured by exposure to a curable environment, as is well known.

The curable composition can exhibit excellent storage stability even in a state of containing an excessive amount of filler, as described below.

The excellent storage stability can be reflected in ΔV of Equation 1 below.$ΔV = 100 \times \left({V}_{L}-{V}_{U}\right) / {V}_{U}$

In Equation 1, V_{L} and V_{U} are lower and upper viscosities of the curable composition, respectively, confirmed by introducing the curable composition into a 30 mL dispenser syringe with a diameter of 26.2 mm and a length of 130 mm, and then maintaining the dispenser syringe in a vertical state, and maintaining it at 25°C for 30 days.

The method of obtaining ΔV in Equation 1 is specifically explained in "9. Storage stability evaluation" of Example sections of this specification.

The smaller the absolute value of ΔV in Equation 1, it means that a uniformly mixed state can be maintained while the sedimentation of the filler does not occur in the vertical storage state.

The lower limit of the absolute value of ΔV in Equation 1 may be 0%, 0.5%, 1%, 1.5%, 2%, 2.5%, 3%, 3.5%, 4%, 4.5%, 5%, 5.5%, 6%, or 6.5% or so, and the upper limit thereof may be 12%, 11%, 10%, 9%, 8%, 7%, 6%, 5%, 4%, 3%, 2%, 1%, or 0.5%or so. The absolute value of ΔV may be within a range of less than or equal to, or less than any one of the above-described upper limits; or within a range of more than or equal to, or more than any one of the above-described lower limits while being less than or equal to, or less than any one of the above-described upper limits.

The ΔV in Equation 1 may be a positive or negative number. Typically, if the above vertical state is maintained, the lower viscosity (V_{L}) of the curable composition is likely to be greater than the upper viscosity (V_{U}), so that the ΔV is generally likely to be a positive number, but may also be a negative number.

The curable composition can exhibit the excellent storage stability even when it contains an excessive amount of filler to ensure high thermal conductivity. For example, the lower limit of the thermal conductivity of the curable composition or the cured product of the curable composition may be 2.5 W/m·K, 2.9 W/m·K, 3.0 W/m·K, 3.05 W/m·K, 3.1 W/m·K, 3.15 W/m·K, or 3.2 W/m·K or so, and the upper limit thereof may be 50 W/m·K, 45 W/m·K, 40 W/m·K, 35 W/m·K, 30 W/m·K, 25 W/m·K, 20 W/m·K, 15 W/m·K, 10 W/m·K, 9 W/m·K, 8 W/m·K, 7 W/m·K, 6 W/m·K, 5 W/m·K, 4 W/m·K, or 3 W/m·K or so. The thermal conductivity may be within a range of more than or equal to, or more than any one of the above-described lower limits; or within a range of more than or equal to, or more than any one of the above-described lower limits while being less than or equal to, or less than any one of the above-described upper limits. The thermal conductivity may be evaluated according to the manner described in "1. Evaluation of thermal conductivity" of Example sections of this specification.

The curable composition may comprise at least a resin component and a filler component.

The type of the resin component is not particularly limited. As the resin component, for example, various known components applied in formation of thermally conductive materials, such as so-called thermal interface materials (TIMs), may be used.

An example of such components includes a polyurethane component, a silicone component, an epoxy component, or an acrylic component, and the like.

In one example, the resin component may be a polyurethane component. The type of the term polyurethane component includes known polyurethanes (polymer compounds bonded by urethane bonds) or components capable of forming the polyurethanes through chemical and/or physical reactions.

As the components capable of forming the polyurethanes, so-called polyols and polyisocyanates are known. The components may form the polyurethanes through a urethane reaction. In some cases, a so-called chain extender may also react with the polyol and/or polyisocyanate to form polyurethanes. When the curable composition is the main agent part or curing agent part of the two-component composition, the curable composition may comprise a portion of the polyol, polyisocyanate, and chain extender as an optional component.

In this specification, the term polyol means a compound containing two or more hydroxyl groups. For example, a compound having two hydroxyl groups is generally called a diol, and a compound having three hydroxyl groups is called a triol, where these diols and triols are also a type of polyol.

The lower limit of the number of hydroxyl groups that a polyol has may be 2 or 3, and the upper limit thereof may be 10, 9, 8, 7, 6, 5, 4, 3, or 2. The number of hydroxyl groups may be within a range of less than or equal to, or less than any one of the above-described upper limits; or within a range of more than or equal to, or more than any one of the above-described lower limits; or within a range of more than or equal to, or more than any one of the above-described lower limits while being less than or equal to, or less than any one of the above-described upper limits.

The polyol may have a hydroxyl value (OH value) in an appropriate range. The hydroxyl value of the polyol may be measured according to ASTM E 1899-08 standard. The lower limit of the hydroxyl value may be 100 mgKOH/g, 150 mgKOH/g, 200 mgKOH/g, or 250 mgKOH/g or so, and the upper limit thereof may be 500 mgKOH/g, 450 mgKOH/g, 400 mgKOH/g, 350 mgKOH/g, or 300 mgKOH/g or so. The hydroxyl value may be within a range of more than or equal to, or more than any one of the above-described lower limits; or within a range of less than or equal to, or less than any one of the above-described upper limits; or within a range of less than or equal to, or less than any one of the above-described upper limits while being more than or equal to, or more than any one of the above-described lower limits.

The polyol may have an acid value in an appropriate range. The method of measuring the acid value of the polyol is described in Example sections of this specification. The lower limit of the acid value may be 0 mgKOH/g or so, and the upper limit thereof may be 5 mgKOH/g, 4 mgKOH/g, 3 mgKOH/g, 2 mgKOH/g, 1 mgKOH/g, 0.9 mgKOH/g, 0.8 mgKOH/g, 0.7 mgKOH/g, 0.6 mgKOH/g, 0.5 mgKOH/g, 0.4 mgKOH/g, or 0.3 mgKOH/g or so. The acid value may be within a range of more than or equal to, or more than any one of the above-described lower limits; or within a range of less than or equal to, or less than any one of the above-described upper limits; or within a range of less than or equal to, or less than any one of the above-described upper limits while being more than or equal to, or more than any one of the above-described lower limits.

The lower limit of the molecular weight or weight-average molecular weight of the polyol may be 100 g/mol, 150 g/mol, 200 g/mol, 250 g/mol, 300 g/mol, 350 g/mol, or 400 g/mol or so, and the upper limit thereof may be 1,000 g/mol, 900 g/mol, 800 g/mol, 700 g/mol, 600 g/mol, or 500 g/mol or so. The molecular weight or weight-average molecular weight may be within a range of more than or equal to, or more than any one of the above-described lower limits; or within a range of less than or equal to, or less than any one of the above-described upper limits; or within a range of less than or equal to, or less than any one of the above-described upper limits while being more than or equal to, or more than any one of the above-described lower limits.

As the polyol, any known polyol may be applied without special limitation. As the polyol forming a polyurethane, a polyether polyol or a polyester polyol, and the like is known, and such a polyol may be used in the curable composition.

As the polyether polyol, (poly)ethylene glycol, diethylene glycol, (poly)propylene glycol, 1,2-butylene glycol, 2,3-butylene glycol, 1,3-propanediol, 1,3-butanediol, 1,4-butanediol, 1,6-hexanediol, neopentyl glycol, 1,2-ethylhexyldiol, 1,5-pentanediol, 1,9-nonanediol, 1,10-decanediol, 1,3-cyclohexanedimethanol and 1,4-cyclohexanedimethanol, (poly)ethylenetriol, diethylenetriol, (poly)propylenetriol, glycerin, 1,2,3-butanetriol, 1,2,4-butanetriol, 1,3,4-hexanetriol, 1,3,6-hexanetriol unit and/or trimethylolpropane, and the like are commonly known.

In one example, as the polyol, a polyester polyol may be used. As the polyester polyol, so-called carboxylic acid-based polyols and caprolactone-based polyols are known, and such a polyol may be used as the resin component alone or in combination of two or more.

For example, the polyester polyol may be a polyol represented by Formula 1 or 2 below:

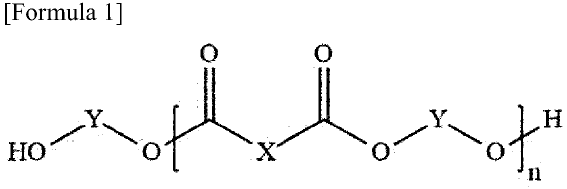

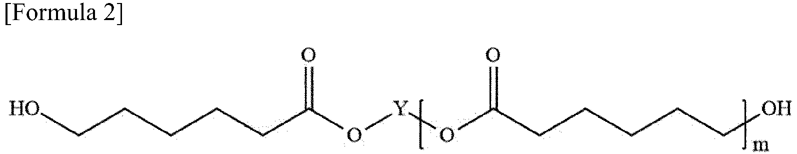

In Formulas 1 and 2, X is a dicarboxylic acid-derived unit, Y is a polyol-derived unit (e.g., a triol or diol unit), and n and m are arbitrary numbers.

The dicarboxylic acid-derived unit is a unit formed by urethane-reacting a dicarboxylic acid with a polyol, and the polyol-derived unit is a unit formed by urethane-reacting a polyol with a dicarboxylic acid or caprolactone.

That is, when the hydroxy group of the polyol reacts with the carboxyl group of the dicarboxylic acid, a water (H₂O) molecule is released through a condensation reaction, and simultaneously an ester bond is formed, where X of Formula 1 above means a moiety excluding the ester bond portion after the dicarboxylic acid forms the ester bond by the condensation reaction, Y is also a moiety excluding the ester bond after the polyol forms the ester bond by the condensation reaction, and the ester bond is represented in Formula 1.

Y of Formula 2 also represents a moiety excluding the ester bond after the polyol forms the ester bond with the caprolactone.

In Formulas 1 and 2, when the polyol-derived unit of Y is a unit derived from a polyol, such as a triol unit, containing three or more hydroxy groups, a structure in which the Y moiety is branched in the structure of the above formula may be implemented.

The type of the dicarboxylic acid-derived unit of X in Formula 1 is not particularly limited. For example, the unit may be any one unit, or two or more units selected from the group consisting of a phthalic acid unit, an isophthalic acid unit, a terephthalic acid unit, a trimellitic acid unit, a tetrahydrophthalic acid unit, a hexahydrophthalic acid unit, a tetrachlorophthalic acid unit, an oxalic acid unit, an adipic acid unit, an azelaic acid unit, a sebacic acid unit, a succinic acid unit, a malic acid unit, a glutaric acid unit, a malonic acid unit, a pimelic acid unit, a suberic acid unit, a 2,2-dimethylsuccinic acid unit, a 3,3-dimethylglutaric acid unit, a 2,2-dimethylglutaric acid unit, a maleic acid unit, a fumaric acid unit, an itaconic acid unit, and a fatty acid unit.

In Formulas 1 and 2, the type of the polyol-derived unit of Y is not particularly limited. For example, the unit may be any one, or two or more units selected from the group consisting of an ethylene glycol unit, a propylene glycol unit, a 1,2-butylene glycol unit, a 2,3-butylene glycol unit, a 1,3-propanediol unit, a 1,3-butanediol unit, a 1,4-butanediol unit, a 1,6-hexanediol unit, a neopentyl glycol unit, a 1,2-ethylhexyldiol unit, a 1,5-pentanediol unit, a 1,10-decanediol unit, a 1,3-cyclohexanedimethanol unit, a 1,4-cyclohexanedimethanol unit, a glycerin unit, and a trimethylolpropane unit.

In Formula 1, n and m are arbitrary numbers, and their ranges may be selected in consideration of the desired physical properties.

For example, the lower limit of the above n may be 2, or 3 or so, and the upper limit thereof may be 10, 9, 8, 7, 6, or 5 or so. The above n may be within a range of less than or equal to, or less than any one of the above-described upper limits; or within a range of more than or equal to, or more than any one of the above-described lower limits; or within a range of more than or equal to, or more than any one of the above-described lower limits while being less than or equal to, or less than any one of the above-described upper limits.

For example, the lower limit of the above m may be 2, or 3 or so, and the upper limit thereof may be 10, 9, 8, 7, 6, or 5 or so. The above m may be within a range of less than or equal to, or less than any one of the above-described upper limits; or within a range of more than or equal to, or more than any one of the above-described lower limits; or within a range of more than or equal to, or more than any one of the above-described lower limits while being less than or equal to, or less than any one of the above-described upper limits.

As the resin component, a polyisocyanate may also be applied. The term polyisocyanate may mean a compound having two or more isocyanate groups. The lower limit of the number of isocyanate groups in the polyisocyanate may be 2, or 3 or so, and the upper limit thereof may be 10, 9, 8, 7, 6, 5, 4, 3, or 2 or so. The number of isocyanate groups may be within a range of more than or equal to, or more than any one of the above-described lower limits; or within a range of less than or equal to, or less than any one of the above-described upper limits; or within a range of less than or equal to, or less than any one of the above-described upper limits while being more than or equal to, or more than any one of the above-described lower limits.

As the polyisocyanate, those commonly used in the industry (e.g., those commonly used to form polyurethanes) without special limitations may be used. Although it is not particularly limited, for example, as the polyisocyanate, a diisocyanate (a compound having two isocyanate groups) and/or a polyisocyanate having three or more isocyanate groups may be used.

When the curable composition is the main agent part or the curing agent part of the above-described two-component composition, the resin component may comprise at least one selected from the group consisting of the polyol and the polyisocyanate.

The content of the resin component in the curable composition may be determined based on the filler component included in the curable composition. For example, the lower limit of the weight ratio of the resin component relative to 100 parts by weight of the filler component of the curable composition may be 1 part by weight, 2 parts by weight, 3 parts by weight, 4 parts by weight, 5 parts by weight, 6 parts by weight, 7 parts by weight, or 8 parts by weight or so, and the upper limit thereof may be 100 parts by weight, 95 parts by weight, 90 parts by weight, 85 parts by weight, 80 parts by weight, 75 parts by weight, 70 parts by weight, 65 parts by weight, 60 parts by weight, 55 parts by weight, 50 parts by weight, 45 parts by weight, 40 parts by weight, 35 parts by weight, 30 parts by weight, 25 parts by weight, 20 parts by weight, 15 parts by weight, 10 parts by weight, or 9 parts by weight or so. The weight ratio may be within a range of more than or equal to, or more than any one of the above-described lower limits; or within a range of less than or equal to, or less than any one of the above-described upper limits; or within a range of less than or equal to, or less than any one of the above-described upper limits while being more than or equal to, or more than any one of the above-described lower limits.

When the polyol and the polyisocyanate are simultaneously included as the resin components, the ratio between the two components is not limited, and for example, the ratio may be controlled so that the two components may react to form a polyurethane. In one example, when the two components are simultaneously included, the ratio between them may be adjusted in consideration of the ratio (OH/NCO) of the mole number of hydroxyl groups (OH) included in the polyol to the mole number of isocyanate groups (NCO) included in the polyisocyanate. For example, the lower limit of the ratio OH/NCO may be about 0.01, 0.05, 0.1, 0.5, or 1 or so, and the upper limit thereof may be 100, 50, 25, 10, 9, 8, 7, 6, 5, 4, 3, 2, or 1 or so. The ratio OH/NCO may be within a range of more than or equal to, or more than any one of the above-described lower limits; within a range of less than or equal to, or less than any one of the above-described upper limits; or within a range of less than or equal to, or less than any one of the above-described upper limits while being more than or equal to, or more than any one of the above-described lower limits.

In one example, when the curable composition is a main agent part or a curing agent part of a two-component composition, the main agent part may comprise a polyol among the curable compounds, and the curing agent part may comprise a polyisocyanate among the curable compounds.

The curable composition includes a filler component together with the resin component. The term filler component is a component composed solely of fillers. Therefore, for example, all fillers included in the curable composition may be combined to form the filler component.

In the curable composition, the lower limit of the weight ratio of the filler component may be 70 wt%, 71 wt%, 72 wt%, 73 wt%, 74 wt%, 75 wt%, 76 wt%, 77 wt%, 78 wt%, 79 wt%, 80 wt%, 81 wt%, 82 wt%, 83 wt%, 84 wt%, 85 wt%, 86 wt%, 87 wt%, 88 wt%, 89 wt%, or 90 wt% or so, and the upper limit thereof may be 99 wt%, 98 wt%, 97 wt%, 96 wt%, 95 wt%, 94 wt%, 93 wt%, or 92 wt% or so. The weight ratio of the filler component may be within a range of more than or equal to, or more than any one of the above-described lower limits; or within a range of less than or equal to, or less than any one of the above-described upper limits while being more than or equal to, or more than any one of the above-described lower limits.

In the curable composition, to secure desired properties such as thermal conductivity, even when an excessive amount of filler component as above is included, the excellent storage stability as described above can be secured.

The filler component may comprise a thermally conductive filler, or may be a thermally conductive filler component. The term thermal conductive filler or thermal conductive filler component means a filler or filler component that enables the curable composition or a cured product of the curable composition to exhibit the above-described thermal conductivity through the relevant filler or filler component.

Examples of fillers capable of forming the filler component include oxide fillers such as aluminum oxide (alumina), magnesium oxide, beryllium oxide, or titanium oxide; nitride fillers such as boron nitride, silicon nitride, or aluminum nitride; carbide fillers such as silicon carbide; hydroxide fillers such as aluminum hydroxide or magnesium hydroxide; metal fillers such as copper, silver, iron, aluminum, or nickel; metal alloy fillers such as titanium; or silicon powders such as quartz, glass, or silica, and the like, but are not limited thereto. Furthermore, in consideration of securing insulation characteristics, carbon fillers such as graphite or activated carbon may also be considered.

One, or two or more of the fillers may be included in the filler component.

The filler may comprise at least a hydroxide filler among the above-described fillers. The hydroxide filler has excellent insulation or flame retardancy, and has a lower density compared to other fillers, thereby being advantageous for forming lighter materials. However, even while using such a hydroxide filler, it is possible to simultaneously secure the desired high thermal conductivity and storage stability.

The lower limit of the content of the hydroxide filler in the filler component may be 20 wt%, 22 wt%, 24 wt%, 26 wt%, 28 wt%, 30 wt%, or 32 wt% or so, and the upper limit thereof may be, for example, 50 wt%, 45 wt%, 40 wt%, 35 wt%, 34 wt%, 33 wt%, 32 wt%, 31 wt%, 30 wt%, 28 wt%, or 26 wt% or so. The weight ratio may be within a range of more than or equal to, or more than any one of the above-described lower limits; or within a range of less than or equal to, or less than any one of the above-described upper limits; or within a range of less than or equal to, or less than any one of the above-described upper limits while being more than or equal to, or more than any one of the above-described lower limits.

To ensure the storage stability, flame retardancy, and thermal conductivity, and the like, the filler component may be adjusted.

For example, the weighted average BET specific surface area of the filler component may be adjusted. The weighted average BET specific surface area is a weighted average value obtained by calculating BET specific surface areas of all mixing fillers in consideration of a mixing weight ratio when the filler component is formed by mixing multiple fillers. For example, when the filler component is formed by mixing a filler (1) with a BET specific surface area of B1 and a filler (2) with a BET specific surface area of B2 in a weight ratio of W1: W2 (1:2), the weighted average BET specific surface area is a value obtained from (B1 × W1 + B2 × W2) / (W1 + W2). The method of obtaining a BET specific surface area of each filler is described in "5. Evaluation of filler specific surface area" of Example sections of this specification.

The smaller the BET specific surface area of the filler component, the lower the degree of interaction between the filler component and another component such as the resin component; and conversely, the higher it is, the higher the degree of interaction between the filler component and another component such as the resin component, and accordingly, the BET specific surface area may be adjusted to an appropriate level considering the purpose.

The lower limit of the weighted average BET specific surface area of the filler component may be 0.75 m²/g, 0.80 m²/g, 0.85 m²/g, 0.90 m²/g, 0.95 m²/g, 1.00 m²/g, or 0.17 m²/g or so, and the upper limit thereof may be 10 m²/g, 9.5 m²/g, 9 m²/g, 8.5 m²/g, 8 m²/g, 7.5 m²/g, 7 m²/g, 6.5 m²/g, 6 m²/g, 5.5 m²/g, 5 m²/g, 4.5 m²/g, 4 m²/g, 3.5 m²/g, 3 m²/g, 2.5 m²/g, 2 m²/g, 1.5 m²/g, 1.0 m²/g, 0.95 m²/g, or 0.9 m²/g or so. The weighted average BET specific surface area may be within a range of more than or equal to, or more than any one of the above-described lower limits; or within a range of less than or equal to, or less than any one of the above-described upper limits while being more than or equal to, or more than any one of the above-described lower limits.

The weighted average BET specific surface area of the hydroxide filler included in the filler component may also be adjusted. Here, the meaning of the weighted average BET specific surface area is as described above. The lower limit of the weighted average BET specific surface area of the hydroxide filler may be 0.01 m²/g, 0.05 m²/g, 0.10 m²/g, or 0.15 m²/g or so, and the upper limit thereof may be 1 m²/g, 0.95 m²/g, 0.9 m²/g, 0.85 m²/g, 0.8 m²/g, 0.75 m²/g, 0.7 m²/g, 0.65 m²/g, 0.6 m²/g, 0.55 m²/g, 0.5 m²/g, 0.45 m²/g, 0.4 m²/g, 0.35 m²/g, 0.3 m²/g, 0.25 m²/g, or 0.2 m²/g or so. The weighted average BET specific surface area may be within a range of more than or equal to, or more than any one of the above-described lower limits; within a range of less than or equal to, or less than any one of the above-described upper limits; or within a range of less than or equal to, or less than any one of the above-described upper limits while being more than or equal to, or more than any one of the above-described lower limits.

The filler component may comprise a non-hydroxide filler in addition to the hydroxide filler. In this instance, the non-hydroxide filler means any filler other than the hydroxide filler present in the filler component, and a specific example thereof includes the oxide filler; the nitride filler, the carbide filler; the metal filler; the metal alloy filler; the silicon powder; and/or the carbon filler, as described above, but is not limited thereto.

The weighted average BET specific surface area of the non-hydroxide filler included in the filler component may also be adjusted. Here, the meaning of the weighted average BET specific surface area is as described above. The lower limit of the weighted average BET specific surface area of the non-hydroxide filler may be 0.4 m²/g, 0.6 m²/g, 0.8 m²/g, 1.0 m²/g, 1.2 m²/g, or 0.3 m²/g or so, and the upper limit thereof may be 10 m²/g, 9 m²/g, 8 m²/g, 7 m²/g, 6 m²/g, 5 m²/g, 4 m²/g, 3 m²/g, 2 m²/g, or 1.5 m²/g or so. The weighted average BET specific surface area may be within a range of more than or equal to, or more than any one of the above-described lower limits; or within a range of less than or equal to, or less than any one of the above-described upper limits; or within a range of less than or equal to, or less than any one of the above-described upper limits while being more than or equal to, or more than any one of the above-described lower limits.

The weighted average particle diameter of the filler component may be adjusted. The weighted average particle diameter is a weighted average value obtained by calculating average particle diameters of all mixing fillers in consideration a mixing weight ratio when the filler component is formed by mixing multiple fillers. For example, when a filler (1) with an average particle diameter of D1 and a filler (2) with an average particle diameter of D2 as the fillers are mixed in a weight ratio of W1:W2 (1:2), the weighted average particle diameter is a value obtained from (D1×W1+D2×W2)/(W1+W2).

The lower limit of the weighted average particle diameter of the filler component may be 1 µm, 5 µm, 10 µm, 15 µm, 20 µm, 25 µm, or 30 µm or so, and the upper limit thereof may be 50 µm, 45 µm, 40 µm, 35 µm, or 30 µm or so. The weighted average particle diameter of the filler component may be within a range of less than or equal to, or less than any one of the above-described upper limits; or within a range of less than or equal to, or less than any one of the above-described upper limits while being more than or equal to, or more than any one of the above-described lower limits.

The weighted average particle diameter of the hydroxide filler included in the filler component may be adjusted. The meaning of the weighted average particle diameter is as described above. The lower limit of the weighted average particle diameter of the hydroxide filler may be 50 µm, 55 µm, 60 µm, 65 µm, 70 µm, 75 µm, or 80 µm or so, and the upper limit thereof may be 200 µm, 190 µm, 180 µm, 170 µm, 160 µm, 150 µm, 140 µm, 130 µm, 120 µm, 110 µm, 100 µm, 90 µm, 85 µm, or 80 µm or so. The weighted filler particle diameter may be within a range of more than or equal to, or more than any one of the above-described lower limits; or within a range of less than or equal to, or less than any one of the above-described upper limits while being more than or equal to, or more than any one of the above-described lower limits.

The weighted average particle diameter of the non-hydroxide filler in the filler component may be adjusted. The meaning of the weighted average particle diameter is as described above. The lower limit of the weighted average particle diameter of the non-hydroxide filler may be 2 µm, 3 µm, 4 µm, 5 µm, 6 µm, 7 µm, 8 µm, 9 µm, or 10 µm or so, and the upper limit thereof may be 50 µm, 45 µm, 40 µm, 35 µm, 30 µm, 28 µm, 26 µm, 24 µm, 22 µm, 20 µm, 18 µm, 16 µm, 14 µm, 12 µm, 10 µm, or 8 µm or so. The weighted average particle diameter may be within a range of less than or equal to, or less than any one of the above-described upper limits; or within a range of less than or equal to, or less than any one of the above-described upper limits while being more than or equal to, or more than any one of the above-described lower limits.

The weighted average particle diameter of the non-spherical filler included in the filler component may also be adjusted. The meaning of the weighted average particle diameter is as described above. The lower limit of the weighted average particle diameter of the non-spherical filler may be 10 µm, 15 µm, 20 µm, 25 µm, 30 µm, or 35 µm or so, and the upper limit thereof may be 42 µm, 41 µm, 40 µm, 39 µm, 38 µm, 37 µm, 36 µm, 35 µm, 34 µm, 33 µm, 32 µm, 31 µm, 30 µm, 29 µm, or 28 µm or so. The above weighted filler particle diameter may be within a range of less than or equal to, or less than any one of the above-described upper limits; or within a range of less than or equal to, or less than any one of the above-described upper limits while being more than or equal to, or more than any one of the above-described lower limits.

The filler component may comprise the non-spherical filler in a certain range. The lower limit of the content of the amorphous filler in the filler component may be 30 wt%, 35 wt%, 40 wt%, 45 wt%, 50 wt%, 55 wt%, 60 wt%, 65 wt%, 66 wt%, 67 wt%, 68 wt%, 69 wt%, 70 wt%, 71 wt%, 72 wt%, 73 wt%, 74 wt%, or 75 wt% or so, and the upper limit thereof may be 90 wt%, 85 wt%, 80 wt%, 75 wt%, or 70 wt% or so. The weight ratio may be within a range of more than or equal to, or more than any one of the above-described lower limits; or within a range of less than or equal to, or less than any one of the above-described upper limits; or within a range of less than or equal to, or less than any one of the above-described upper limits while being more than or equal to, or more than any one of the above-described lower limits.

The weighted average particle diameter of the spherical filler included in the filler component may be adjusted. The meaning of the weighted average particle diameter is as described above. The lower limit of the weighted average particle diameter may be 10 µm, 12 µm, 14 µm, 16 µm, 18 µm, or 20 µm or so, and the upper limit thereof may be 100 µm, 90 µm, 80 µm, 70 µm, 60 µm, 50 µm, 40 µm, 30 µm, or 20 µm or so. The weighted filler particle diameter may be within a range of more than or equal to, or more than any one of the above-described lower limits; or within a range of less than or equal to, or less than any one of the above-described upper limits; or within a range of less than or equal to, or less than any one of the above-described upper limits while being more than or equal to, or more than any one of the above-described lower limits.

The filler component may be prepared, for example, by mixing two or more fillers with different average particle diameters. In this case, the upper limit of the number of mixing fillers may be 10, 9, 8, 7, 6, 5, 4, or 3 or so, and the lower limit thereof may be 2. The type of filler may be within a range of more than or equal to, or more than any one of the above-described lower limits; or within a range of less than or equal to, or less than any one of the above-described upper limits while being more than or equal to, or more than any one of the above-described lower limits.

In such a case, ΔW1 of Equation 2 below of the filler component may be adjusted.$ΔW 1 = {W}_{other} / {W}_{T}$

In Equation 2, W_{T} is a weight of a filler with the smallest average particle diameter among the mixing fillers, and Wₒₜₕₑᵣ is a value obtained by subtracting the weight W_{T} from the total weight of the filler component.

The lower limit of the ΔW1 may be 0.5, 0.6, 0.7, 0.8, 0.9, 1.0, 1.1, 1.2, 1.3, 1.4, 1.5, 1.6, 1.7, or 1.8 or so, and the upper limit thereof may be 5, 4.5, 4, 3.5, 3, 2.5, 2.3, 2.2, 2.1, 2.0, 1.9, 1.8, 1.7, 1.6, 1.5, 1.4, 1.3, 1.2, 1.1, or 1.0 or so. The value of the ΔW1 may be within a range of more than or equal to, or more than any one of the above-described lower limits; or within a range of less than or equal to, or less than any one of the above-described upper limits; or within a range of less than or equal to, or less than any one of the above-described upper limits while being more than or equal to, or more than any one of the above-described lower limits.

By formulating the filler component so that ΔW1 falls within the above range, it is possible to simultaneously secure the desired high thermal conductivity and storage stability. If ΔW1 is too small, thermal conductivity may not be effectively secured, and if ΔW1 is too large, a deviation in upper and lower viscosities is likely to occur due to sedimentation of the filler component.

In such cases, ΔW2 of Equation 3 below of the filler component may fall within a certain range.$ΔW 2 = {W}_{F} / {W}_{S}$

In Equation 3, W_{F} is a weight of a filler with the largest average particle diameter among the mixing fillers, and W_{S} is a weight of a filler with the second largest average particle diameter among the mixing fillers.

The lower limit of ΔW2 in Equation 3 above may be 0.1, 0.5, 0.6, 0.7, 0.8, 0.9, or 1.0 or so, and the upper limit thereof may be 2, 1.5, 1.4, 1.3, 1.2, 1.1, or 1.0 or so. The value of ΔW2 may be within a range of more than or equal to, or more than any one of the above-described lower limits; within a range of less than or equal to, or less than any one of the above-described upper limits; or within a range of less than or equal to, or less than any one of the above-described upper limits while being more than or equal to, or more than any one of the above-described lower limits.

For formation of the filler component, the average particle diameter of the filler with the largest average particle diameter (hereinafter, large-diameter filler) among the mixing fillers may be adjusted. For example, the lower limit of the average particle diameter of the large-diameter filler may be 50 µm, 55 µm, 60 µm, 65 µm, 70 µm, 75 µm, or 80 µm or so, and the upper limit thereof may be 200 µm, 190 µm, 180 µm, 170 µm, 160 µm, 150 µm, 140 µm, 130 µm, 120 µm, 110 µm, 100 µm, 90 µm, 85 µm, or 80 µm or so. The average particle diameter may be within a range of more than or equal to, or more than any one of the above-described lower limits; or within a range of less than or equal to, or less than any one of the above-described upper limits while being more than or equal to, or more than any one of the above-described lower limits.

The lower limit of the BET specific surface area of the large-diameter filler may be 0.01 m²/g, 0.05 m²/g, 0.1 m²/g, 0.15 m²/g, or 0.17 m²/g or so, and the upper limit thereof may be 5 m²/g, 4.5 m²/g, 4 m²/g, 3.5 m²/g, 3 m²/g, 2.5 m²/g, 2 m²/g, 1.5 m²/g, 1.0 m²/g, 0.9 m²/g, 0.8 m²/g, 0.7 m²/g, 0.6 m²/g, 0.5 m²/g, 0.4 m²/g, 0.3 m²/g, 0.25 m²/g, 0.2 m²/g, or 0.17 m²/g or so. The BET specific surface area may be within a range of more than or equal to, or more than any one of the above-described lower limits; or within a range of less than or equal to, or less than any one of the above-described upper limits; or within a range of less than or equal to, or less than any one of the above-described upper limits while being more than or equal to, or more than any one of the above-described lower limits.

The large-diameter filler may be the hydroxide filler or the non-hydroxide filler, and in one example, it may be the hydroxide filler as described above.

The lower limit of the weight ratio of the large-diameter filler within the filler component may be 20 wt%, 22 wt%, 24 wt%, 26 wt%, 28 wt%, 30 wt%, or 32 wt% or so, and the upper limit thereof may be 50 wt%, 45 wt%, 40 wt%, 35 wt%, 34 wt%, 33 wt%, 32 wt%, 31 wt%, 30 wt%, 28 wt%, or 26 wt% or so. The weight ratio may be within a range of more than or equal to, or more than any one of the above-described lower limits; or within a range of less than or equal to, or less than any one of the above-described upper limits; or within a range of less than or equal to, or less than any one of the above-described upper limits while being more than or equal to, or more than any one of the above-described lower limits.

For formation of the filler component, the lower limit of the average particle diameter of the filler with the smallest average particle diameter (hereinafter, small-diameter filler) among the mixing fillers may be 0.001 µm, 0.001 µm, 0.005 µm, 0.01 µm, 0.05 µm, 0.1 µm, 0.5 µm, 1 µm, or 1.5 µm or so, and the upper limit thereof may be 10 µm, 9 µm, 8 µm, 7 µm, 6 µm, 5 µm, 4.5 µm, 4 µm, 3.5 µm, 3 µm, 2.5 µm, 2 µm, or 1.5 µm or so. The average particle diameter may be within a range of more than or equal to, or more than any one of the above-described lower limits; or within a range of less than or equal to, or less than any one of the above-described upper limits; or within a range of less than or equal to, or less than any one of the above-described upper limits while being more than or equal to, or more than any one of the above-described lower limits.

The lower limit of the BET specific surface area of the small-diameter filler may be 0.1 m²/g, 0.2 m²/g, 0.3 m²/g, 0.4 m²/g, 0.5 m²/g, 0.6 m²/g, 0.7 m²/g, 0.8 m²/g, 0.9 m²/g, 1 m²/g, 1.1 m²/g, 1.2 m²/g, 1.3 m²/g, 1.4 m²/g, 1.5 m²/g, 1.6 m²/g, 1.7 m²/g, 1.8 m²/g, 1.9 m²/g, or 2 m²/g or so, and the upper limit thereof may be 10 m²/g, 9 m²/g, 8 m²/g, 7 m²/g, 6 m²/g, 5 m²/g, 4.5 m²/g, 4 m²/g, 3.5 m²/g, 3 m²/g, 2.5 m²/g, or 2 m²/g or so. The BET specific surface area may be within a range of more than or equal to, or more than any one of the above-described lower limits; or within a range of less than or equal to, or less than any one of the above-described upper limits; or within a range of less than or equal to, or less than any one of the above-described upper limits while being more than or equal to, or more than any one of the above-described lower limits.

The lower limit of the weight ratio of the small-diameter filler within the filler component may be 30 wt%, 32 wt%, 34 wt%, 36 wt%, 38 wt%, 40 wt%, 42 wt%, 44 wt%, 46 wt%, 48 wt%, or 50 wt% or so, and the upper limit thereof may be 50 wt%, 48 wt%, 46 wt%, 44 wt%, 42 wt%, 40 wt%, 38 wt%, or 36 wt% or so. The weight ratio may be within a range of more than or equal to, or more than any one of the above-described lower limits; or within a range of less than or equal to, or less than any one of the above-described upper limits; or within a range of less than or equal to, or less than any one of the above-described upper limits while being more than or equal to, or more than any one of the above-described lower limits.

The small-diameter filler may be a hydroxide filler or a non-hydroxide filler, and in one example, it may be the non-hydroxide filler as described above.

In the filler component, the lower limit of the weight ratio of the small-diameter filler relative to 100 parts by weight of the large-diameter filler may be 10 parts by weight, 20 parts by weight, 30 parts by weight, 40 parts by weight, 50 parts by weight, 60 parts by weight, 60 parts by weight, 70 parts by weight, 80 parts by weight, 90 parts by weight, 100 parts by weight, 120 parts by weight, 140 parts by weight, 160 parts by weight, 180 parts by weight, or 200 parts by weight or so, and the upper limit thereof may be 400 parts by weight, 300 parts by weight, 250 parts by weight, 200 parts by weight, 180 parts by weight, 160 parts by weight, 140 parts by weight, 120 parts by weight, or 110 parts by weight or so. The weight ratio may be within a range of more than or equal to, or more than any one of the above-described lower limits; or within a range of less than or equal to, or less than any one of the above-described upper limits; or within a range of less than or equal to, or less than any one of the above-described upper limits while being more than or equal to, or more than any one of the above-described lower limits.

The two or more mixing fillers for formation of the filler component may further comprise, in addition to the large-diameter filler and the small-diameter filler, a filler whose average particle diameter is between the large-diameter filler and the small-diameter filler (hereinafter, may be referred to as a medium-diameter filler). In this case, the lower limit of the average particle diameter of the medium-diameter filler may be 10 µm, 11 µm, 12 µm, 13 µm, 14 µm, 15 µm, 16 µm, 17 µm, 18 µm, 19 µm, or 20 µm or so, and the upper limit thereof may be 45 µm, 40 µm, 35 µm, 30 µm, 25 µm, or 20 µm or so. The average particle diameter may be within a range of more than or equal to, or more than any one of the above-described lower limits; within a range of less than or equal to, or less than any one of the above-described upper limits; or within a range of less than or equal to, or less than any one of the above-described upper limits while being more than or equal to, or more than any one of the above-described lower limits.

The medium-diameter filler may have an appropriate level of BET specific surface area. The lower limit of the BET specific surface area of the medium-diameter filler may be 0.01 m²/g, 0.05 m²/g, 0.1 m²/g, 0.11 m²/g, 0.12 m²/g, 0.13 m²/g, or 0.14 m²/g or so, and the upper limit thereof may be 5 m²/g, 4.5 m²/g, 4 m²/g, 3.5 m²/g, 3 m²/g, 2.5 m²/g, 2 m²/g, 1.5 m²/g, 1.0 m²/g, 0.9 m²/g, 0.8 m²/g, 0.7 m²/g, 0.6 m²/g, 0.5 m²/g, 0.4 m²/g, 0.3 m²/g, 0.25 m²/g, 0.2 m²/g, 0.19 m²/g, 0.18 m²/g, 0.17 m²/g, 0.16 m²/g, 0.15 m²/g, or 0.14 m²/g or so. The BET specific surface area may be within a range of more than or equal to, or more than any one of the above-described lower limits; or within a range of less than or equal to, or less than any one of the above-described upper limits; or within a range of less than or equal to, or less than any one of the above-described upper limits while being more than or equal to, or more than any one of the above-described lower limits.

The lower limit of the weight ratio of the medium-diameter filler within the filler component may be 20 wt%, 22 wt%, 24 wt%, 26 wt%, 28 wt%, 30 wt%, or 32 wt% or so, and the upper limit thereof may be 50 wt%, 45 wt%, 40 wt%, 35 wt%, 34 wt%, 33 wt%, 32 wt%, 31 wt%, 30 wt%, 28 wt%, or 26 wt% or so. The weight ratio may be within a range of more than or equal to, or more than any one of the above-described lower limits; or within a range of less than or equal to, or less than any one of the above-described upper limits; or within a range of less than or equal to, or less than any one of the above-described upper limits while being more than or equal to, or more than any one of the above-described lower limits.

The medium-diameter filler may be W_{S} in the above-described Equation 3.

The medium-diameter filler may be a hydroxide filler or a non-hydroxide filler, and in one example, it may be the non-hydroxide filler as described above.

For example, the lower limit of the weight ratio of the medium-diameter filler relative to 100 parts by weight of the large-diameter filler within the filler component may be 10 parts by weight, 20 parts by weight, 30 parts by weight, 40 parts by weight, 50 parts by weight, 60 parts by weight, 60 parts by weight, 70 parts by weight, 80 parts by weight, 90 parts by weight, or 100 parts by weight or so, and the upper limit thereof may be 300 parts by weight, 250 parts by weight, 200 parts by weight, 180 parts by weight, 160 parts by weight, 140 parts by weight, 120 parts by weight, or 100 parts by weight or so. The weight ratio may be within a range of more than or equal to, or more than any one of the above-described lower limits; or within a range of less than or equal to, or less than any one of the above-described upper limits; or within a range of less than or equal to, or less than any one of the above-described upper limits while being more than or equal to, or more than any one of the above-described lower limits.

The lower limit of the total weight ratio of the large-diameter, medium-diameter, and small-diameter fillers within the filler component may be 80 wt%, 85 wt%, 90 wt%, 95 wt%, 97 wt%, or 99 wt% or so, based on the total weight of the filler component, and the upper limit thereof may be 100 wt% or so, based on the total weight of the filler component. The weight ratio may be within a range of more than or equal to, or more than any one of the above-described lower limits; or within a range of less than or equal to, or less than any one of the above-described upper limits; or within a range of less than or equal to, or less than any one of the above-described upper limits while being more than or equal to, or more than any one of the above-described lower limits.

The filler component may comprise at least a low-density filler and a high-density filler. The terms low-density filler and high-density filler mean fillers having a certain level of density. For example, the upper limit of the density of the low-density filler may be 3.00 g/cm³, 2.90 g/cm³, 2.80 g/cm³, 2.70 g/cm³, 2.60 g/cm³, 2.50 g/cm³, or 2.45 g/cm³ or so, and the lower limit thereof may be 1.5 g/cm³, 2 g/cm³, 2.1 g/cm³, 2.2 g/cm³, 2.3 g/cm³, or 2.4 g/cm³ or so. The density of the low-density filler may be within a range of less than or equal to, or less than any one of the above-described upper limits; or within a range of less than or equal to, or less than any one of the above-described upper limits while being more than or equal to, or more than any one of the above-described lower limits.

For example, the lower limit of the density of the high-density filler may be 3.00 g/cm³, 3.1 g/cm³, 3.2 g/cm³, 3.3 g/cm³, 3.4 g/cm³, 3.5 g/cm³, 3.6 g/cm³, 3.7 g/cm³, 3.8 g/cm³, 3.9 g/cm³, or 3.95 g/cm³ or so, and the upper limit thereof may be 7 g/cm³, 6.5 g/cm³, 6 g/cm³, 5.5 g/cm³, 5 g/cm³, 4.5 g/cm³, or 4 g/cm³ or so. The density of the high-density filler may be within a range of more than or equal to, or more than any one of the above-described lower limits; or within a range of less than or equal to, or less than any one of the above-described upper limits while being more than or equal to, or more than any one of the above-described lower limits.

The density of the filler may be measured by a known method, and for example, may be obtained based on ASTM D792 standard.

For example, the lower limit of the weight ratio of the low-density filler in the filler component may be 30 wt%, 32 wt%, 34 wt%, 36 wt%, 38 wt%, 40 wt%, 42 wt%, 44 wt%, 46 wt%, 48 wt%, 50 wt%, 52 wt%, 54 wt%, 56 wt%, 58 wt%, or 60 wt% or so, and the upper limit thereof may be 90 wt%, 88 wt%, 86 wt%, 84 wt%, 82 wt%, 70 wt%, 78 wt%, 76 wt%, 74 wt%, 72 wt%, 70 wt%, 68 wt%, 66 wt%, 64 wt%, 62 wt%, 60 wt%, 58 wt%, 56 wt%, 54 wt%, 52 wt%, 50 wt%, 48 wt%, 46 wt%, 44 wt%, 42 wt%, or 40 wt% or so. The weight ratio may be within a range of more than or equal to, or more than any one of the above-described lower limits; within a range of less than or equal to, or less than any one of the above-described upper limits; or within a range of less than or equal to, or less than any one of the above-described upper limits while being more than or equal to, or more than any one of the above-described lower limits.

In one example, the low-density filler may be the hydroxide filler as described above.

The curable composition may basically comprise the resin component and the filler component, and may comprise additional components, if necessary. In this instance, the types of components capable of inclusion are not particularly limited.

For example, one, or two or more of common components, such as a dispersant, a plasticizer, a curing catalyst, a flame retardant, a viscosity modifier, a thixotropic agent, a diluent, a surface treatment agent, and/or a coupling agent, may be added thereto as needed.

The curable composition may be prepared by mixing the respective components as listed above. In this process, the mixing method is not particularly limited, and any known mixing method for preparing a composition may be applied.

In one example, the curable composition may be the main agent part or the curing agent part of the two-component composition.

The present specification discloses, as a two-component composition comprising a main agent part and a curing agent part, a two-component composition in which either of or both the main agent part and the curing agent part are the curable composition.

For example, the main agent part may comprise at least a polyol and a filler component, wherein the polyol may be the above-described polyol, and the filler may be the above-described filler. Furthermore, the curing agent part may comprise at least a polyisocyanate and a filler component, wherein the polyisocyanate may be the above-described polyisocyanate.

The present specification also discloses a use of the curable composition or a cured product thereof. For example, the present application relates to a product comprising a heat-generating component and a material in contact with the heat-generating component, wherein the material comprises the above-described curable composition or a cured product thereof.

Here, the type of the heat-generating component is not particularly limited, and all components having characteristics generating heat during a use or storage process, wherein heat by such heat generation must be managed, may be applied. In such products, the material comprising the curable composition or a cured product thereof may be used as a so-called TIM (Thermal Interface Material).

For example, various electrical and electronic products, such as irons, washing machines, dryers, clothes care devices, electric shavers, microwave ovens, electric rice cookers, refrigerators, dishwashers, air conditioners, fans, humidifiers, air purifiers, mobile phones, walkie-talkies, televisions, radios, computers, or laptops, or battery products such as secondary batteries, may comprise such heat-generating components.

For example, in the products, the material comprising the curable composition or a cured product thereof may be used as a use for transferring heat generated from the heat-generating component to a cooling area. In this case, the material may dissipate heat generated from the heat-generating component. The heat-generating component may be a battery cell or a battery module.

### Advantageous Effects

The present specification discloses a curable composition. The curable composition can exhibit excellent storage stability without generating viscosity changes or viscosity unevenness due to sedimentation of an excessive amount of filler, and the like, even in a state of containing the filler to achieve high thermal conductivity. The curable composition can simultaneously exhibit high thermal conductivity and storage stability even while using a hydroxide filler as a filler. The present specification discloses a use of the curable composition.

### Mode for Invention

Hereinafter, the curable composition and the like are specifically described through examples and comparative examples, but the scope of the curable composition and the like is not limited by the following examples.

### 1. Evaluation of thermal conductivity

Thermal conductivity of a curable composition was measured by a hot-disk method according to ISO 22007-2 standard. Specifically, a mixture of a main agent part and a curing agent part in a volume ratio of 1:1 in an example or a comparative example was placed in a mold having a thickness of about 7 mm or so, and then cured, and the thermal conductivity was measured in the through plane direction using the Hot Disk equipment. As stipulated in the standard (ISO 22007-2), as the Hot Disk equipment, the equipment that could check the thermal conductivity by measuring the temperature change (electrical resistance change) while the sensor with the nickel wire double spiral structure was heated was used. The curing of the curable composition was performed by maintaining the mixture of the main agent part and the curing agent part in a volume ratio of 1:1 at room temperature (about 25°C) for about 24 hours.

The mixing of the main agent part and the curing agent part in a volume ratio of 1:1 was performed using equipment (1) in which two cartridges (2a, 2b, 2) and one static mixer (5) as shown in Figure 1. As each cartridge (2, 2a, 2b), a cartridge (Sulzer, AB050-01-10-01) was used, which had a circular material injection part with a diameter of 18 mm, a circular material discharge part (4, 4a, 4b) with a diameter of 3 mm, a height of 100 mm, and an internal volume of 25 mL. As the static mixer (5), a stepped static mixer (Sulzer, MBH-06-16T) was used, which had the material discharge part(4, 4a, 4b), and a circular accommodating part (6a, 6b) with a diameter of 3 mm, a circular discharge part (7) with a diameter of 2 mm, and 16 elements. The main agent and curing agent parts, loaded into the cartridges (2a, 2b, 2), respectively, are pushed at a constant speed of 1 mm/sec by a TA (Texture Analyzer) (3, 3a, 3b) as a pressurization means, injected into the static mixer (5), and mixed, and then, the mixture is discharged through the discharge part (7).

### 2. Measurement of average particle diameter

The average particle diameter of the filler mentioned in this specification is the D50 particle diameter of the filler, which is the particle diameter measured by Marvern's Mastersizer 3000 equipment in accordance with ISO-13320 standard. Upon measurement, ethanol was used as a solvent. The incident laser is scattered by the fillers dispersed in the solvent. The values of the intensity and directionality of the scattered laser vary depending on the size of the filler, which are analyzed using the Mie theory, whereby the D50 particle diameter can be obtained. Through the above analysis, the volume-based cumulative distribution can be obtained through conversion to the diameter of a sphere having the same volume as each of the dispersed fillers, and the average particle diameter (D50 particle diameter) can be obtained by setting the value at 50% of the cumulative volume as the median value from the distribution.

### 3. Evaluation of filler sphericity degree

It was evaluated whether a filler was a spherical filler by measuring a sphericity degree of the filler. A sphericity degree of a filler as a three-dimensional particle is defined as a ratio (S'/S) of the particle's surface area (S) and a surface area (S') of a sphere with the same volume as that of the particle, and for actual particles, it is typically an average value of circularity degrees. The circularity degree is a ratio of a boundary (P) of a two-dimensional image of a particle and a boundary of a circle with the same area (A) as the image, which is theoretically obtained using the following equation. The circularity degree has a value ranging from 0 to 1, where in the case of an ideal circle, the circularity degree is 1. In this specification, a filler with a circularity degree of 0.9 or more is defined as a spherical filler, and a filler having the circularity degree of less than 0.9 such as an amorphous filler is defined as a non-spherical filler. Such a circularity degree can also be measured using Marvern's particle shape analysis equipment (FPIA-3000).$Circularity degree = 4 π {A / P}^{2}$

### 4. Evaluation of filler density

A filler density was obtained by obtaining specific gravity of the filler according to ASTM D792 and multiplying the obtained specific gravity by 0.9976.

### 5. Evaluation of filler specific surface area

A BET (Brunauer-Emett-Teller) specific surface area is a specific surface area calculated by a BET (Brunauer-Emett-Teller) method, by using an adsorption curve obtained by adsorbing nitrogen gas onto a sample. The BET specific surface area was obtained by adsorbing nitrogen gas using an ASAP 2020 (Accelerated Surface Area and Porosimetry System) instrument.

### 6. Density evaluation of curable composition

A density of a curable composition was evaluated using the following method. A mixture of a main agent part and a curing agent part in a volume ratio of 1:1 in an example or a comparative example was injected into a mold, and cured to form a cured product of a predetermined volume, and then the weight of the cured product was measured. Subsequently, the density of the cured product was measured through the weight and volume. Here, the curing of the curable composition was performed in the same manner as in the thermal conductivity measurement.

### 7. Evaluation of weight-average molecular weight

A weight-average molecular weight (Mw) was measured using GPC (Gel permeation chromatography). In this specification, the unit of weight-average molecular weight is g/mol. An analytical sample was placed in a 20 mL vial, and diluted with THF (tetrahydrofuran) to a concentration of about 20 mg/mL, and then after the calibration standard sample and the analytical sample were filtered through a syringe filter (pore size: 0.2 µm), the weight-average molecular weight was measured. Agilent Technologies' ChemStation was used as an analysis program, and the weight-average molecular weight (Mw) was obtained by comparing an elution time with a calibration curve. The measurement conditions for the weight-average molecular weight are as follows:
<Measurement conditions>
Instrument: Agilent Technologies' 1200 series
Column: using Agilent Technologies' TL Mix. A & B
Solvent: THF
Column temperature: 40°C
Sample concentration: 20 mg/mL, 10 µL injection

As standard samples, using MP: 364000, 91450, 17970, 4910, and 1300.

### 8. Viscosity measurement

A viscosity of a curable composition can be measured using a viscometer (Brookfield LV) and a 52Z spindle. The spindle is selected depending on a viscosity measurement range. After performing zero adjustment of the viscometer, the spindle is mounted on a spindle connection and a plate is mounted on a plate connection. It is adjusted so that a constant separation gap is formed between the spindle and the plate through an adjustment lever. The plate is detached, about 0.5 mL or so of a curable composition is applied to the center of the detached plate, and then the plate applied with the curable composition is mounted on the plate connection again, and after waiting until a torque value was reduced to zero, the viscosity was measured for 3 minutes at about 25°C and a rotation speed of 2.4 rpm. The final value after 3-minute measurement was taken as the viscosity value of the curable composition.

### 9. Storage stability evaluation

A curable composition (main agent part or curing agent part) was placed in a 30 mL dispenser syringe (Musach, PSY-30F) (diameter: about 26.2 mm, length: about 130 mm), and the curable composition was stored for 30 days while maintaining the dispenser syringe in a vertically erected state. This storage was performed in a state without separately controlling relative humidity under conditions of room temperature (about 25°C) and normal pressure (about 1 atm). After the storage, about 0.5 mL or so of the curable composition is collected from each of the upper and lower portions of the dispenser syringe. The viscosities of the upper and lower portions are identified in the manner shown in "8. Viscosity measurement" above, and a viscosity deviation is calculated by substituting the upper and lower viscosities into Equation 1 below, whereby it is possible to confirm storage stability and filler sedimentation through the results.$ΔV = 100 \times \left({V}_{L}-{V}_{U}\right) / {V}_{U}$

In Equation 1, V_{U} is the measured viscosity of the upper curable composition, and V_{L} is the measured viscosity of the lower curable composition.

### Example 1

A two-component curable composition comprising a main agent part and a curing agent part was prepared as follows.

The main agent part was prepared by mixing a resin component (a1), a filler component (b1), a dispersant (c), and a catalyst (d) in a weight ratio (a1: b1: c: d) of 8.21:91.24:0.46:0.09 or so. The ingredients were mixed in a planetary centrifugal stirring vessel under conditions of a revolution of 600 rpm and a rotation of 500 rpm for 3 minutes or so, and defoamed again under conditions of a revolution of 600 rpm and a rotation of 200 rpm for 3 minutes or so to prepare the main agent part.

As the resin component (a1), a polyester-based polyol (Capa^{TM} 2043) (weight-average molecular weight: about 400 g/mol) was used. The polyol is a polyol with an OH value of about 280 mg KOH/g and an acid value of less than about 0.25 mg KOH/g. The OH value is a value measured according to ASTM E 1899-08 standard. The filler component (b1) was prepared by formulating a filler F1 as non-spherical (amorphous) aluminum hydroxide (ATH) with an average particle diameter (D50 particle diameter) of about 80 µm or so and a BET specific surface area of about 0.17 m²/g or so, a filler F2 as spherical alumina with an average particle diameter (D50 particle diameter) of about 20 µm or so and a BET specific surface area of about 0.14 m²/g or so, and a filler F3 as non-spherical alumina with an average particle diameter (D50 particle diameter) of about 1.5 µm or so and a BET specific surface area of about 2.0 m²/g or so in a weight ratio (F1: F2: F3) of 25:25:50.

DISPERBYK-111 (BYK) was used as the dispersant. Furthermore, dibutyltin dilaurate was used as the catalyst.

The curing agent part was prepared by mixing a resin component (a2), a filler component (b2), a dispersant (c), and an additive (e) in a weight ratio (a2: b2: c: e) of 8.96:89.55:0.5:1 or so. The ingredients were mixed in a planetary centrifugal stirring vessel under conditions of a revolution of 600 rpm and a rotation of 500 rpm for 3 minutes or so, and defoamed again under conditions of a revolution of 600 rpm and a rotation of 200 rpm for 3 minutes or so to prepare the curing agent part.

Hexamethylene diisocyanate (HDI) was used as the resin component (a2). The filler component (b2) was prepared by mixing the filler F1 applied in the main agent part, the filler F2 applied in the main agent part, and a filler F4 as non-spherical (amorphous) aluminum hydroxide (ATH) with an average particle diameter (D50 particle diameter) of about 1.5 µm or so and a BET specific surface area of about 3.5 m²/g or so in a weight ratio (F1: F2: F4) of 40:40:20.

The weighted average particle diameter of the entire filler component (b2) was about 40.3 µm or so, the weighted average particle diameter of the hydroxide filler (ATH) was about 53.8 µm or so, the weighted average particle diameter of the oxide filler (alumina) was about 20 µm or so, the weighted average particle diameter of the spherical filler was about 20 µm or so, and the weighted average particle diameter of the non-spherical filler was about 53.8 µm or so.

The weighted average BET specific surface area of the entire filler component (b2) was about 0.82 m²/g or so, the weighted average BET specific surface area of the hydroxide filler was about 1.28 m²/g or so, the weighted average BET specific surface area of the oxide filler (alumina) was about 0.14 m²/g or so, the weighted average BET specific surface area of the spherical filler was about 0.14 m²/g or so, and the weighted average BET specific surface area of the non-spherical filler was about 1.28 m²/g or so.

Disperbyk-111 (byk) was used as the dispersant. Furthermore, VTMO (vinyl trimethoxy silane) was used as the additive.

### Example 2

A main agent part was prepared in the same manner as in Example 1, except that as the filler component (b1) applied in preparation of the main agent part, a filler component obtained by mixing the fillers F1 to F3 of Example 1 in a weight ratio (F1: F2: F3) of 30:30:40 was used. As the curing agent part, the same one as Example 1 was used.

### Example 3

A main agent part was prepared in the same manner as in Example 1, except that as the filler component (b1) applied in preparation of the main agent part, a filler component obtained by mixing the fillers F1 to F3 of Example 1 in a weight ratio (F1: F2: F3) of 32.5:32.5:35 was used. As the curing agent part, the same one as Example 1 was used.

### Comparative Example 1

A main agent part was prepared in the same manner as in Example 1, except that as the filler component (b1) of the main agent part, a filler component obtained by mixing the fillers F1 to F3 in a weight ratio (F1: F2: F3) of 20:20:60. As the curing agent part, the same one as Example 1 was used.

### Comparative Example 2

A main agent part was prepared in the same manner as in Example 1, except that as the filler component (b1) applied in preparation of the main agent part, a filler component obtained by mixing the fillers F1 to F3 of Example 1 in a weight ratio (F1: F2: F3) of 35:35:30 was used. As the curing agent part, the same one as Example 1 was used.

### Comparative Example 3

A main agent part was prepared in the same manner as in Example 1, except that as the filler component (b1) applied in preparation of the main agent part, a filler component obtained by mixing the fillers F1 to F3 of Example 1 in a weight ratio (F1: F2: F3) of 40:40:20 was used. As the curing agent part, the same one as Example 1 was used.

### Comparative Example 4

A main agent part was prepared in the same manner as in Example 1, except that as the filler component (b1) used in preparation of the main agent part, a filler component obtained by mixing the fillers F1 to F3 of Example 1 in a weight ratio (F1: F2: F3) of 40:20:40 was used. As the curing agent part, the same one as Example 1 was used.

### Comparative Example 5

Except that as the filler component (b1) used in preparation of the main agent part, a filler component obtained by mixing a filler F5 as spherical alumina with an average particle diameter (D50 particle diameter) of about 80µm or so and a BET specific surface area of about 0.05 m²/g or so with the fillers F2 and F3 of Example 1 in a weight ratio (F5: F2: F3) of 25:25:50 was used.

The weighted average particle diameters and weighted average BET specific surface areas of the filler components used in the main agent parts of the curable compositions of Examples and Comparative Examples were summarized and described in Table 1 below. In Table 1, the average particle diameter is the weighted average particle diameter, and the specific surface area is the weighted average BET specific surface area.

In Table 1, the unit of particle diameter is µm, and the unit of BET specific surface area is m²/g.

In Table 1, ΔW1 is the ratio (F/F3) of the weight (F3) of the filler with the smallest average particle diameter among the mixing fillers to prepare the filler component in the main agent part and the weight (F) of the remaining fillers, and ΔW2 is the ratio ((F1 or F5)/F2) of the weight (F1 or F5) of the filler with the largest average particle diameter among the mixing fillers to prepare the filler component and the weight (F2) of the filler with the second largest average particle diameter.

**[Table 1]**

| | | Example | | | Comparative Example | | | | |
|---|---|---|---|---|---|---|---|---|---|
| | | 1 | 2 | 3 | 1 | 2 | 3 | 4 | 5 |
| ΔW1 | | 1 | 1.5 | 1.86 | 0.67 | 2.33 | 4 | 1.5 | 1 |
| ΔW2 | | 1 | 1 | 1 | 1 | 1 | 1 | 2 | 1 |
| Average particle diameter | Total | 25.75 | 30.6 | 33.03 | 20.9 | 35.45 | 40.3 | 36.6 | 25.75 |
| | ATH | 80 | 80 | 80 | 80 | 80 | 80 | 80 | - |
| | Alumina | 7.67 | 9.43 | 10.41 | 6.13 | 11.46 | 13.83 | 7.67 | 25.75 |
| | Spherical | 20 | 20 | 20 | 20 | 20 | 20 | 20 | 50 |
| | Non-spherical | 27.67 | 35.14 | 39.3 | 21.13 | 43.77 | 53.83 | 40.75 | 1.5 |
| Specific surface area | Total | 1.08 | 0.89 | 0.8 | 1.26 | 0.71 | 0.52 | 0.9 | 1.05 |
| | ATH | 0.17 | 0.17 | 0.17 | 0.17 | 0.17 | 0.17 | 0.17 | - |
| | Alumina | 1.38 | 1.20 | 1.10 | 1.54 | 1 | 0.76 | 1.38 | 1.05 |
| | Spherical | 0.14 | 0.14 | 0.14 | 0.14 | 0.14 | 0.14 | 0.14 | 0.1 |
| | Non-spherical | 1.39 | 1.22 | 1.12 | 1.54 | 1.01 | 0.78 | 1.09 | 2 |

The ΔV, V_{U} and V_{L} of Equation 1 confirmed according to "9. Storage stability evaluation" above for the main agent parts of the curable compositions of Examples and Comparative Examples, and the thermal conductivity confirmed for the cured products of the mixtures of the main agent parts and the curing agent parts were described in Table 2 below. In Table 2, ΔV is the absolute value of ΔV above. In Table 2, the units of viscosities V_{U} and VL are pa·s, the unit of ΔV is %, and the unit of thermal conductivity is W/m·K.

**[Table 2]**

| | Example | | | Comparative Example | | | | |
|---|---|---|---|---|---|---|---|---|
| | 1 | 2 | 3 | 1 | 2 | 3 | 4 | 5 |
| V_{U} | 300 | 298 | 290 | 300 | 279 | 265 | 290 | 285 |
| V_{L} | 300 | 305 | 310 | 300 | 315 | 330 | 305 | 315 |
| ΔV | 0 | 2.35 | 6.9 | 0 | 12.9 | 24.53 | 5.17 | 10.53 |
| Thermal conductivity | 3 | 3.1 | 3.2 | 2.8 | 3.2 | 3.3 | 2.9 | 3.2 |

From Table 2, it can be confirmed that the main agent parts of Examples prevent sedimentation of the filler component even in a state of including an excessive amount of the filler component, whereby storage stability is secured, and that the cured products thereof exhibit high thermal conductivity.

In Comparative Examples 1 and 4, sedimentation of the filler component was prevented to some extent, but high thermal conductivity could not be secured, and in the case of Comparative Examples 2, 3, and 5, a large deviation occurred in the upper and lower viscosities due to the severe sedimentation of the filler component.

## Claims

1. A curable composition comprising a resin component and
a filler component, wherein
the filler component has a weight ratio of 70 wt% or more, and
the filler component comprises a hydroxide filler, and
forming a cured product with a thermal conductivity of 3.0 W/m·K or more, wherein an absolute value of ΔV in Equation 1 below is 10% or less: $ΔV = 100 \times \left({V}_{L}-{V}_{U}\right) / {V}_{U}$
wherein, V_{L} and V_{U} are lower and upper viscosities of the curable composition after maintaining the curable composition in a 30 mL dispenser syringe with a diameter of 26.2 mm and a length of 130 mm in a vertical state at 25°C for 30 days, respectively.

2. A curable composition comprising a resin component and
a filler component, wherein
the filler component has a weight ratio of 70 wt% or more,
the filler component comprises a hydroxide filler, and
the filler component has a weighted average BET specific surface area of 0.75 m²/g or more, and
forming a cured product with a thermal conductivity of 3.0 W/m·K or more.

3. The curable composition according to claim 1, wherein the filler component has a weighted average BET specific surface area of 0.75 m²/g or more.

4. The curable composition according to claim 1 or 2, wherein the filler component has a weighted average particle diameter of 50 µm or less.

5. The curable composition according to claim 1 or 2, wherein the hydroxide filler has a weighted average particle diameter of 60 µm or more.

6. The curable composition according to claim 1 or 2, wherein the filler component further comprises a non-hydroxide filler.

7. The curable composition according to claim 6, wherein the non-hydroxide filler has a weighted average particle diameter of 50 µm or less.

8. The curable composition according to claim 6, wherein the non-hydroxide filler is an oxide filler or a nitride filler.

9. The curable composition according to claim 1 or 2, wherein the hydroxide filler has a weighted average BET specific surface area in a range of 0.01 to 1 m²/g.

10. The curable composition according to claim 6, wherein the non-hydroxide filler in the filler component has a weighted average BET specific surface area of 0.4 m²/g or more.

11. The curable composition according to claim 1 or 2, wherein the filler component is mixing fillers of two or more fillers having different average particle diameters.

12. The curable composition according to claim 11, wherein ΔW1 in Equation 2 below is in a range of 0.5 to 3: $ΔW 1 = {W}_{other} / {W}_{T}$ wherein, W_{T} is a weight of a filler with the smallest average particle diameter among the mixing fillers, and Wₒₜₕₑᵣ is a value obtained by subtracting the W_{T} from the total weight of the filler component.

13. The curable composition according to claim 11, wherein ΔW2 in Equation 3 below is in a range of 0.5 to 2: $ΔW 2 = {W}_{F} / {W}_{S}$ wherein, W_{F} is a weight of a filler with the largest average particle diameter among the mixing fillers, and W_{S} is a weight of a filler with the second largest average particle diameter among the mixing fillers.

14. The curable composition according to claim 12, wherein the filler with the smallest average particle diameter among the mixing fillers has an average particle diameter in a range of 0.1 µm to 10 µm, and a BET specific surface area in a range of 1 m²/g to 10 m²/g.

15. The curable composition according to claim 12, wherein the filler with the largest average particle diameter among the mixing fillers has an average particle diameter of 60 µm or more, and a BET specific surface area in a range of 0.1 m²/g to 1 m²/g.

16. The curable composition according to claim 12, wherein the filler with the largest average particle diameter among the mixing fillers is a hydroxide filler.

17. The curable composition according to claim 1 or 2, wherein the resin component is a polyol, a polyisocyanate, or a polyurethane.

18. A two-component composition comprising: a main agent part including a main resin; and
a curing agent part including a curing agent, wherein
the main agent part or the curing agent part is the curable composition of claim 1 or 2.

19. A product comprising: a heat-generating component; and
a material in contact with the heat-generating component, wherein
the material comprises the curable composition of claim 1 or 2, or a cured product thereof.

20. The product according to claim 19, wherein the heat-generating component is a battery cell, a battery module, or a battery pack.
